# EUROPEAN PATENT APPLICATION

(11) **EP 0 823 989 A1**
(43) Date of publication of application: **18.02.1998**
(21) Application number: 97202510.0
(22) Date of filing: 13.08.1997
(51) Int. Cl.: A01J 25/06, A01J 25/11

(54) **Pressvat for cheese making**

(30) Priority: 13.08.1996 NL 1003792
(71) Applicant: Scherjon Engineering en Machinebouw, 9257 WN Noordbergum (NL)
(72) Inventor: Scherjon, Hielke, 9257 WN Noordbergum (NL)

(57) **Abstract**

The invention refers to a press vat which can hold from 1000 liter content for the cheese making tank, enclosing a rectangular tray to receive the curd and whey mixer; strainer to withdraw the whey and to discharge it from the pressvat; a mobile carriage which is on top of the press vat; which is movable in the length of the tray; attached to this tray are the cutting devices, the first cutting knives are there to cut the curd in breadth; these are also there as transport device for the curd blocks; the second cutting knife, that for forming rows of curd blocks it can cut the curd transverse on the transport direction; the curd blocks are transported by the mobile carriage to the exhaust-end , from where the curd blocks can be put in cheese moulds.

## Description

The invention refers to a press vat which can hold from 1000 liter content for the cheese making tank, enclosing a rectangular tray to receive the curd and whey mixer; strainer to withdraw the whey and to discharge it from the pressvat; a mobile carriage which is on top of the press vat; which is movable in the length of the tray; attached to this tray are the cutting devices, the first cutting knives are there to cut the curd in breadth; these are also there as transport device for the curd blocks; the second cutting knife, that for forming rows of curd blocks it can cut the curd transverse on the transport direction; the curd blocks are transported by the mobile carriage to the exhaust-end , from where the curd blocks can be put in cheese moulds.

Such a structure is already known. With the known structure it is above all a tray for working up large amounts of milk, namely amounts from about 5000 liters up to about 30,000 liters. It is a tray with three solid sides and at front there is a hatch that also works as a knife. This hatch is, during filling the tray with curd by hand, closed. The curdbed is usually handily smoothed by using a rake. The knife is there to cut in relevant lengths. Before the curdbed is cut in the relevant length, a pressing plate has crushed the curd. This pressing plate is also posted after the knife, and has the same breadth as the tray. Thus is it known to engineer the bottom of the press vat as a transporter, which is there to move the curd blocks step by step outside, through an open end-part of the tray and cut the pressed curd blocks automatically.
The transport bottom is constructed as a perforated mat. This with the purpose to serve as a whey-discharge, so that during pressing the whey is transported through the bottom of the press vat. The cutted curd blocks are usually pushed by a mechanism on the transport-way, from where they can be put in the cheese moulds.

With the known structure, the problem occurs that the curd bed has to be smoothed by hand. This leads to the fact that the curd blocks are not all of the same size. Besides, the curd blocks can be remodeled during the cutting procedure and during moving across the transport-bottom. The curd blocks are therefore more transformed.
A second problem occurs, with the whey discharge. With the known structure a strainer belt is used, which is also used as a transporter, so that the making costs as well as the company-costs of the press vat are high.
Curd blocks, which are not cut in the right position or which come not in the right form in the moulds, can lead to cheeses with irregular forms and/or deviated weight, which is unwanted. Also broken curd pieces lead to pollution of the environment of the cheese-making room.
The invention aims therefore an improved cheese-making equipment, where problems mentioned above don't, or at least in a much-reduced way, occur. More in general the invention aims at making cheese-making equipment which is reliable and efficient. Therefore, the invention of a cheese-making equipment from above is characterized by the fact, that cutting device and the inlet of the curd/whey mixture are tied up to a mobile carriage and the whey is transported through perforated sidewalls.
In the next description the invention will be described more accurate, with a reference to the added drawing of an n example:

Figure 1 shows schematically in side view a press vat like the invention.
Figure 2 shows schematically a front view of the press vat of figure 1. In the figures 1 and 2 are corresponding the same numbers used.

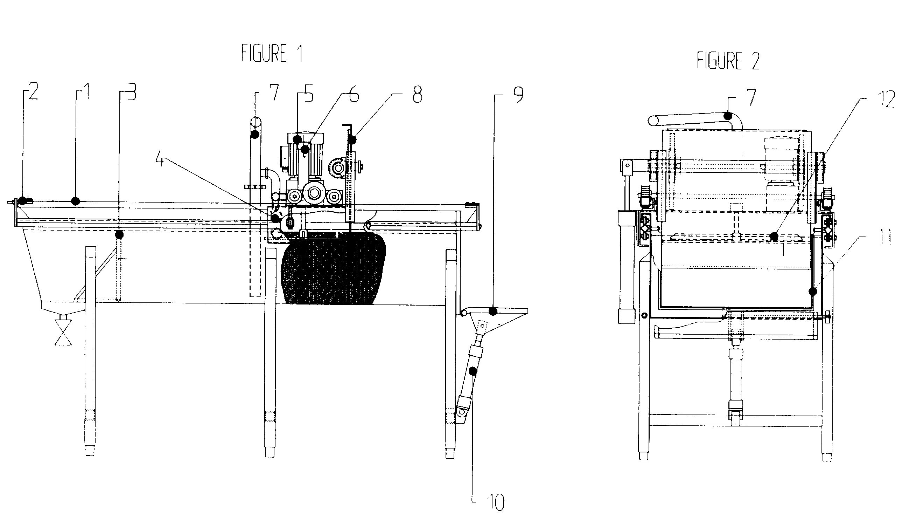

In figure 1 it shows that the press vat has double sidewalls, between which there is some space. This space is used as transporting channel for the whey that comes free during cheese making. The inner walls are perforated, which are there for the whey discharge. The frontend of the tray has a hatch that can be opened and closed by an air cylinder. The end plate in the tray is adjustable, depending on how many liters one wants to work up, so that one gets always the same endproducts.
Above the tray there is a mobile carriage which can move across on the tray in the length. The instigation of the tray is tied up to the tray itself, or at the back of the press vat. The cutting device, inlet, pressing plate and the nozzles for cleaning are tied up to the mobile carriage. All actions that have to be made during the process are entirely steered by a PLC, which contents established recipes.
The action of the invention will be explained with the figures 1 and 2, in which numbers will be used to explain certain things.
1 and 2 stand for the teeth-belt and the tensioner, which work as drive on part of the mobile carriage, 3 stands for the adjustable end plate, 4 stands for the mobile carriage, 5 stands for the engine for the drive-on of the carriage, 6 stands for the air cylinder which makes the pressing plate work, 7 stands for the inlet of the whey/curd mixture, 8 stands for the knife for deviding and cutting the curd blocks, 9 stands for the hatch, 10 stands for opening and closing the hatch, 11 stands for the perforated inner walls and 12 stands for the pressing plate.
The press vat works as followed: if the tray is been filled up, the hatch (9) is closed. The filling happens completely automatically. At the inlet (7) an inlet pipe is tied up, through which the curd/whey is pumped in the tray. Before filling the mobile carriage goes to the center of the tray. By tying up the inlet pipe you accomplish that curd/whey gradually is pumped below the surface of the whey that is in the press vat. The whey is during this procedure transported through the perforated side walls (11). The now made curd bed is worked up now as followed: after the inlet pipe is removed, the curd bed is pressed first by the pressing plate (12), so that the whey is transported through the perforated walls (11), and a curd bed appears that is fit for cheese making. The mobile carriage (4) goes to the length of the cheese. Now the knife (8), on which in the length ribbon knives are tied up, is pushed down, so that the curd is cut into blocks. The mobile carriage goes back to start-position after the cutting. During this going back of the mobile carriage the knife is in down-position so that the curd blocks on the hatch (9), that is in horizontal position now, and works as a working table, are placed. This procedure of pressing and cutting repeats itself a few times, until the tray is empty.

## Claims

1. Press vat which can hold from 1000 liters for the cheese making tank, enclosing a mainly rectangular reservoir for receiving a curd/whey mixture; whey discharge, perforated inner walls in the length of the tray, for withdrawing whey and transporting it out of the reservoir and cutting devices. Therefore the invention, a press vat like above is characterized by the fact that the cutting devices, one which can cut the curd blocks transverse on the bottom of the tray, and a second tied up to the first device, that cuts the curd in length, a pressing plate which during the filling procedure presses the curd bed, so that the whey is transported through the perforated inner walls, and the inlet mechanism of the press vat are tied up on a mobile carriage and the whey is transported through perforated side walls.
